# EUROPÄISCHE PATENTSCHRIFT

(11) **EP 1 828 639 B1**
(45) Veröffentlichungstag und Bekanntmachung des Hinweises auf die Patenterteilung: **22.09.2010**
(21) Anmeldenummer: 05813775.3
(22) Anmeldetag: 09.12.2005
(51) Int. Cl.: F16H 55/08, F16H 48/10

(54) **ZAHNRADPAARUNG AUS KRONENRAD UND RITZEL**
GEAR PAIR CONSISTING OF A CROWN GEAR AND OF A PINION GEAR
ENGRENAGE COMPOSE D'UNE COURONNE DENTEE ET D'UN PIGNON

(30) Priorität: 23.12.2004 DE 102004062379
(43) Veröffentlichungstag der Anmeldung: 05.09.2007
(73) Patentinhaber: SONA BLW Präzisionsschmiede GmbH, 80807 München (DE)
(72) Erfinder: GUTMANN, Peter, 81927 München (DE); STETTINGER, Heinrich, 85551 München (DE); ZERLING, Frank, 85669 Pastetten (DE)
(74) Vertreter: Grättinger Möhring von Poschinger Patentanwälte Partnerschaft
(86) Internationale Anmeldenummer: PCT/EP2005/013234
(87) Internationale Veröffentlichungsnummer: WO 2006/072355

(56) Entgegenhaltungen:
- EP-A- 0 271 844
- WO-A-2004/099649
- DE-A1- 10 147 681
- US-A- 2 313 183
- US-A- 4 744 263
- US-A- 5 845 533
- PATENT ABSTRACTS OF JAPAN Bd. 012, Nr. 454 (M-769), 29. November 1988 (1988-11-29) -& JP 63 180766 A (TOYOTA MOTOR CORP), 25. Juli 1988 (1988-07-25)

## Beschreibung

Die vorliegende Erfindung betrifft eine Zahnradpaarung aus Kronenrad und Ritzel als geradverzahntes Stirnrad bei einem Achskreuzwinkel von 90° sowie ein Differentialausgleichsgetriebe, welches mindestens zwei erfindungsgemäße Zahnradpaarungen mit einander zuweisenden Kronenrädern aufweist.

Eine gattungsgemäße Zahnradpaarung sowie ein daraus hergestelltes Differentialausgleichsgetriebe findet sich in der gattungsmäßigen DE 101 47 681 A1. Obgleich die darin beschriebenen Kronenradgetriebe in mancher Hinsicht den für Differentialausgleichsgetriebe üblicherweise eingesetzten Kegelradgetrieben überlegen sind, insbesondere hinsichtlich ihrer geringen axialen Tiefe sowie ihrer hohen Zahnfuß-Überlastsicherheit, konnten sich Kronenradgetriebe zum Differentialausgleich aus Gründen der Dauerbetriebsfestigkeit bisher nicht im Fahrzeugbereich durchsetzen.

In Differentialausgleichsgetrieben können außergewöhnlich große - insbesondere stoßartige - Belastungen auf die Getriebeverzahnung wirken. Gattungsgemäße Zahnradpaarungen aus Kronenrad und einem als geradverzahntes Stirnrad ausgebildeten Ritzel werden diesen hohen Beanspruchungen bisher nicht gerecht. Die Grenzbedingungen einer gattungsgemäßen Kronenradverzahnung werden im wesentlichen durch die Ausgestaltung der Verzahnung des Kronenrads bestimmt. Aufgrund der geometrisch bedingt kurzen radialen Berührungslinie hat sich insbesondere die Zahnflankentragfähigkeit der Zähne des Kronenrads als kritisch für die Betriebsfestigkeit einer solchen Zahnradpaarung erwiesen, wohingegen die Zahnfußtragfähigkeit aufgrund der vollflächigen stirnseitigen Ausbildung der Zähne auf dem Kronenrad eher als unkritisch zu beurteilen ist. Daneben muß jedoch auch stets auf eine ausreichende Festigkeit des Ritzels bzw. seiner Verzahnung geachtet werden.

Ausgehend von dem vorgenannten Stand der Technik ist es die Aufgabe der vorliegenden Erfindung die Festigkeit einer gattungsgemäßen Zahnradpaarung aus Kronenrad und Ritzel, insbesondere die Zahnflankentragfähigkeit der Zähne des Kronenrads zu verbessern.

Diese Aufgabe wird mit der vorliegenden Erfindung gelöst, indem bei einer gattungsgemäßen Zahnradpaarung aus Kronenrad und Ritzel die Zähne des Ritzels zur Reduzierung eines Unterschnitts der Zähne des Kronenrads - gemäß Patentanspruch 1 - in radialer Richtung bezogen auf das Kronenrad von außen nach innen einen zunehmenden Eingriffswinkel oder - gemäß dem nebengeordneten Patentanspruch 5 - bei konstantem Eingriffswinkel eine von außen nach innen abnehmende Profilverschiebung aufweisen. Die Verzahnungen der erfindungsgemäßen Zahnradpaarung aus Kronenrad und Ritzel sind - wie üblich - in den tragenden Zahnflankenbereichen zueinander konjugiert ausgebildet. Ausgehend von einer erfindungsgemäß vorgegebenen Geometrie der Zähne des Ritzels kann z.B. mittels numerischer Berechnung des Rollvorgangs der Verzahnung des Ritzels die zur erfindungsgemäßen Ausgestaltung der Zähne des Ritzels konjugierte Geometrie der Zähne des Kronenrades berechnet werden.

Die Ausgestaltungen gemäß den nebengeordneten Patentansprüchen 1 und 5 sind durch den gemeinsamen Erfindungsgedanken miteinander verbunden, mit einer - bezogen auf das Kronenrad - radial erfolgenden Variation der Geometrie der Ritzelverzahnung eine Reduzierung des radial innen erforderlichen Unterschnitts der Zähne des Kronenrads zu erzielen und damit eine Verlängerung der tragenden Flanke der Kronenradzähne nach radial innen zu ermöglichen.

Die Begriffe Eingriffswinkel und Profilverschiebung sind in der für Zahnradpaarungen typischen Art und Weise, wie sie beispielsweise der DIN 3960 entnommen werden können, definiert. Der Eingriffswinkel bezeichnet dabei den Winkel zwischen der Flächennormalen im Teilkreis und der Tangente an den Teilkreis im Wälzpunkt. Bei der Profilverschiebung handelt es sich um den Abstand der Profilbezugslinie (Profilmittellinie) des Bezugsprofils vom Teilkreis, die sich in absoluter Zahl aus dem Produkt des dimensionslosen Profilverschiebungsfaktors mit dem Modul des Zahnrads berechnet. Eine Abnahme der Profilverschiebung resultiert somit in einer Abnahme der Zahndicke, insbesondere der Zahnkopfdicke.

Die Zunahme des Eingriffswinkels bzw. die Abnahme der Profilverschiebung der Zähne des Ritzels erfolgt nach der Definition in Anspruch 1 bzw. Anspruch 5 jeweils in radialer Richtung von außen nach innen bezogen auf die radiale Ausdehnung des Kronenrads. Dies entspricht der axialen Richtung in Bezug auf das Ritzel. Diese kann aufgrund des fehlenden Richtungsbezugs, welcher durch die relative Lage des Ritzels zum Kronenrad vorgegeben ist, jedoch nicht als Bezugssystem für diese Definition dienen.

Durch die besonders vorteilhafte Ausgestaltung der Verzahnung der erfindungsgemäßen Zahnradpaarung aus Kronenrad und Ritzel können die Zahnflanken der Zähne des Kronenrads im Vergleich zum Stand der Technik über eine größere radiale Breite genutzt werden. Dies wird einerseits durch einen radial von außen nach innen zunehmenden Eingriffswinkel der Zähne des Ritzels ermöglicht, womit eine Reduzierung des ansonsten entstehenden Unterschnitts der Zahnflanken der Zähne des Kronenrads erzielt wird. Es kann damit ein größerer Teil der Zahnflanken der Zähne des Kronenrads aktiv zur Kraftübertragung genutzt werden. Andererseits ermöglicht auch die - bei konstantem Eingriffswinkel - von radial außen nach innen abnehmende Profilverschiebung in äußerst vorteilhafter Weise die aktive Nutzung der Zähne des Kronenrads über eine größere radiale Breite. Die Berührlinienlänge und Gesamtüberdeckung der Kronenradverzahnung wird vorteilhaft erhöht.

Gemäß einer vorteilhaften Ausgestaltung der erfindungsgemäßen Zahnradpaarung aus Kronenrad und Ritzel ist vorgesehen, daß bei nach radial innen zunehmendem Eingriffswinkel der Ritzelverzahnung die Zähne des Ritzels ferner mit einer variablen Profilverschiebung ausgestattet werden. Die Profilverschiebung kann dabei zum einen vorteilhaft von radial außen nach innen - wie bereits zuvor für einen konstanten Eingriffswinkel geschildert - abnehmen. Zum anderen kann bei nach innen zunehmendem Eingriffswinkel jedoch auch eine nach innen zunehmende Profilverschiebung vorgesehen sein, mit der eine auftretende Kopfüberspitzung der Zähne des Ritzels in gewissem Umfang kompensiert werden kann. Auch mit dieser Ausgestaltung ist eine im Vergleich zu gattungsgemäßen Zahnradpaarungen längere Berührlinie sowie eine höhere Gesamtüberdeckung vorteilhaft erreichbar.

Bei jedem der vorgenannten Fälle ist gemäß einer weiteren vorteilhaften Ausgestaltung zusätzlich vorgesehen, daß die Zähne des Ritzels von radial außen nach innen eine Kopfkürzung, im Sinne einer Zurücknahme des Kopfkreisdurchmessers, d.h. einer Zurücknahme der Höhe des Zahnes, aufweisen. Damit kann in äußerst vorteilhafter Weise ein Unterschnitt der Zähne des Kronenrads nochmals reduziert werden bzw. ein solcher idealerweise ganz vermieden werden.

Die erfindungsgemäßen Ausgestaltungen einer gattungsgemäßen Zahnradpaarung finden insbesondere in solchen Fällen Anwendung, in denen sich die Anzahl der Zähne des Kronenrads jenseits der Unterschnittgrenzbedingungen befindet, für die bei üblicher Geometrie der Zähne mit konstanter Profilverschiebung, konstantem Eingriffswinkel und konstanter Zahnhöhe ein schädlicher Unterschnitt der Zähne des Kronenrads entstehen würde. Gerade die Unterschnittgrenzbedingung wird mit Zahnradpaarungen nach der vorliegenden Erfindung positiv beeinflußt, d.h. es kommt in jedem Fall zu einer Erweiterung der tragenden Flanke der Kronenradzähne nach radial innen. Es werden somit in vorteilhafter Weise einerseits nicht-tragende Zahnflankenbereiche vermieden und andererseits bisher nicht nutzbare Zahnflankenbereiche aktiviert; die Gesamtüberdeckung der Zahnflanken von Kronenrad und Ritzel wird vergrößert. Die üblichen Grenzbedingungen der Verzahnung, insbesondere die sogenannte Spitzengrenze, ab der eine Überspitzung der jeweiligen Verzahnung eintritt, sowie die Interferenzgrenze sind bei der Ausgestaltung einer erfindungsgemäßen Zahnradpaarung vorteilhaft zu beachten.

In bevorzugter Art und Weise werden daher die inneren und äußeren Grenzwerte des Eingriffswinkels und/oder der Profilverschiebung derart gewählt, daß radial außen die Spitzengrenze für die Zähne des Kronenrads und radial innen die Spitzengrenze für die Zähne des Ritzels eingehalten werden.

Gemäß einer bevorzugten Ausgestaltung der vorliegenden Erfindung wird dabei im Falle eines von außen nach innen zunehmenden Eingriffswinkels ein radial äußerer Grenzwert für den Eingriffswinkel gewählt, der bei oder nahe der Spitzengrenze für die Zähne des Kronenrads liegt und ein radial innerer Grenzwert für den Eingriffswinkel gewählt, der bei oder nahe der Spitzengrenze für die Zähne des Ritzels liegt. Je nach Ausgangsdaten ergibt sich damit für vorteilhafte Ausgestaltungen einer erfindungsgemäßen Zahnradpaarung in absoluten Werten eine Variation des Eingriffswinkels über die Zahnbreite um bis zu etwa 5°, vorzugsweise auch nur bis zu etwa 2°.

Eine weitere bevorzugte Ausgestaltung der erfindungsgemäßen Zahnradpaarung sieht für den radial äußeren und inneren Grenzwert der variablen Profilverschiebung die gleichen Grenzbedingungen (außen: bei oder nahe der Spitzengrenze der Zähne des Kronenrads; innen: bei oder nahe der Spitzengrenze der Zähne des Ritzels) vor. Je nach Ausgangsdaten ergibt sich damit für eine entsprechende Ausgestaltung einer erfindungsgemäßen Zahnradpaarung in absoluten Werten eine Variation des dimensionslosen Profilverschiebungsfaktors über die Zahnbreite um bis zu einem Wert von etwa 0,4, vorzugsweise auch nur bis zu etwa 0,2.

Bei nach innen zunehmendem Eingriffswinkel und variabler Profilverschiebung ergibt sich mit den vorgenannten Grenzbedingungen für die jeweiligen inneren und äußeren Grenzwerte des Eingriffswinkels und der Profilverschiebung eine gewisse Auswahl an zur Verringerung eines ansonsten entstehenden Unterschnitts geeigneten, voneinander abhängigen Wertepaaren. Dies erklärt auch, daß bei nach innen zunehmendem Eingriffswinkel sowohl eine nach innen abnehmende als auch eine nach innen zunehmende Profilverschiebung der Zähne des Ritzels mögliche und vorteilhafte Ausgestaltungen der Erfindung darstellen.

Die in axialer Richtung des Ritzels resultierende asymmetrische Form der Zähne führt bei einer gattungsgemäßen Zahnradpaarung mit Achsversatz zu einer asymmetrischen Belastbarkeit bei Rechts- und Linkslauf des Ritzels relativ zum Kronenrad. Gemäß einer weiteren vorteilhaften Ausgestaltung ist somit, insbesondere im Hinblick auf den bevorzugten Einsatzzweck der erfindungsgemäßen Zahnradpaarung in einem Differentialausgleichsgetriebe, vorgesehen, daß die erfindungsgemäße Zahnradpaarung keinen Achsversatz aufweist.

Hierfür sind gemäß einer weiteren vorteilhaften Ausgestaltung der erfindungsgemäßen Zahnradpaarung Hilfsmittel vorzusehen, die eine axiale Führung des Ritzels auf dem Kronenrad ermöglichen. Bei einer bevorzugten Ausführung der erfindungsgemäßen Zahnradpaarung weist das Ritzel hierzu auf der in Bezug auf das Kronenrad radial innen und/oder außen liegenden Seite einen ring- oder deckelförmigen Anschlagskörper auf, der in besonders vorteilhafter Weise einteilig mit der Verzahnung des Ritzels ausgebildet ist. Diese Ausführung bewirkt einen äußerst vorteilhaft wechselwirkenden Effekt bei der resultierenden Betriebsfestigkeit einer Paarung aus Kronenrad und Ritzel, bei der eine radial nach innen zunehmende Kopfkürzung vorgesehen ist. Insbesondere eine radial innen erfolgende Deckelung des Ritzels erhöht dabei maßgeblich die Zahnfußbruchfestigkeit der Ritzelverzahnung auf der in Bezug auf das Kronenrad radial innen liegenden Seite der Verzahnung. Da nach der vorgenannten Variante der vorliegenden Erfindung ein Unterschnitt der Zähne des Kronenrads vorteilhaft mit einer nach radial innen verlaufenden Kopfkürzung der Zähne des Ritzels vermieden wird, kann die durch die Kopfkürzung erfolgte Schwächung der Zähne des Ritzels in vorteilhafter Weise durch die radial innen liegende Deckelung der Ritzelverzahnung, die deren Festigkeit stärkt, wieder ausgeglichen bzw. sogar überkompensiert werden. Gleichzeitig hilft die mit dem Anschlagskörper erzielte axiale Führung des Ritzels auf dem Kronenrad eine radiale (bezüglich des Kronenrads) Verschiebung des Ritzels zu vermeiden.

Im Falle einer axialen Führung des Ritzels mittels beidseits am Ritzel angebrachten bzw. angeformten Anschlagskörpern wird die axiale Führung des Ritzels auf dem Kronenrad sowie die Betriebsfestigkeit der gesamten erfindungsgemäßen Zahnradpaarung nochmals verbessert.

Eine bevorzugte Weiterbildung der erfindungsgemäßen Zahnradpaarung sieht außerdem vor, daß die Zähne des Kronenrads nach radial innen sphärisch abgeflacht sind und der innere Anschlagskörper des Ritzels auf seiner den Zähnen des Ritzels zugewandten Fläche für eine flächige Anlage dazu passend ausgebildet ist. Mit dieser Ausgestaltung können durch den inneren Anschlagskörper dann insbesondere auch die schädliche Wirkung von axial (bezogen auf das Kronenrad) wirkenden Kraftstößen auf die Zahnradpaarung abgemildert werden, da zumindest ein Teil eines solchen Kraftstoßes durch den Anschlagskörper des Ritzels auf die radial innen liegende sphärische Abflachung der Zähne des Kronenrads abgeleitet wird. Eine solche Kraft wird damit nicht mehr unmittelbar über die Zahnflanken der Verzahnungen von Kronenrad und Ritzel übertragen.

Zur Herstellung einer erfindungsgemäßen Zahnradpaarung stehen dem Fachmann sämtliche für Zahn- und Kronenräder aus dem Stand der Technik bekannten Materialien und Herstellungsverfahren, z.B. umformende oder/und spanabhebende Verfahren, sowie die bekannten Verfahren zur Härtung der verwendeten Materialien zur Verfügung.

Schließlich ist die vorliegende Erfindung auch auf ein Differentialausgleichsgetriebe gerichtet, welches mit zwei einander zuweisenden Kronenrädern und einem oder mehreren mit diesen kämmenden Ritzeln mindestens zwei Zahnradpaarungen nach einem der vorhergehenden Ansprüche aufweist. Zur möglichen und detaillierten Ausgestaltung des Getriebes darf dabei auf den bekannten Stand der Technik verwiesen werden. Die besondere Ausgestaltung der Verzahnung der erfindungsgemäßen Zahnradpaarung erhöht die Betriebsfestigkeit eines derartigen Differentialausgleichsgetriebes maßgeblich, womit auch die möglichen Einsatzgebiete des erfindungsgemäßen Differentialausgleichsgetriebes beträchtlich erweitert werden. Durch die Verwendung mehrerer Ritzel zwischen den beiden einander zuweisenden Kronenrädern kann man noch höheren Lasten gerecht werden.

Nachfolgend wird die erfindungsgemäße Zahnradpaarung an mehreren Ausführungsbeispielen anhand der Zeichnung näher erläutert. Dabei zeigt:
- Fig. 1: eine perspektivische Darstellung eines Ausführungsbeispiels der erfindungsge- mäßen Zahnradpaarung,
- Fig. 2a bis: 2d verschiedene Ausgestaltungen der Ritzel- verzahnung einer erfindungsgemäßen Zahn- radpaarung,
- Fig. 3a und 3b: perspektivische Darstellungen zweier numerisch berechneter, einander zuwei- sender Zahnflanken der Kronenradverzah- nung einer gattungsgemäßen und einer erfindungsgemäßen Zahnradpaarung und
- Fig. 4 bis 7: jeweils zwei Schnittbilder von Ausfüh- rungsbeispielen einer erfindungsgemäßen Zahnradpaarung.

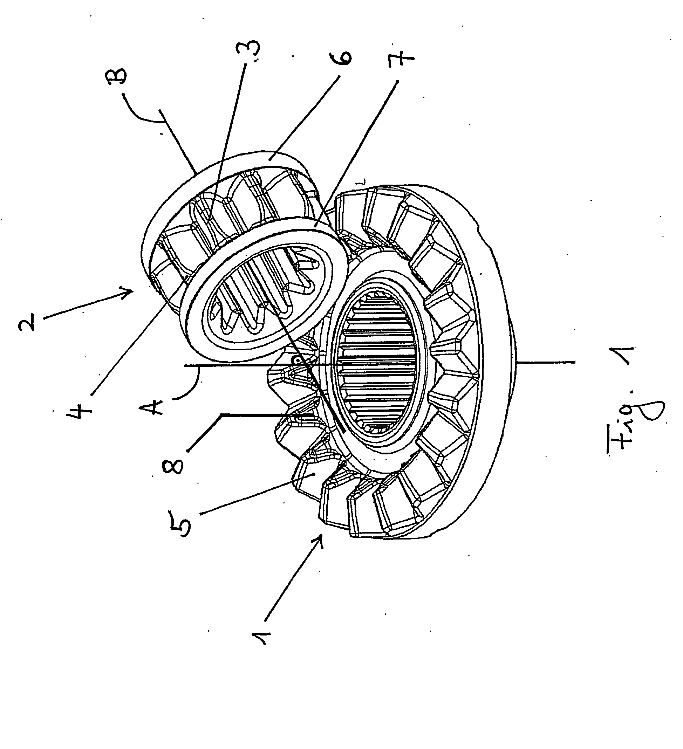

In Fig. 1 ist ein erstes Ausführungsbeispiel einer erfindungsgemäßen Zahnradpaarung aus einem Kronenrad 1 und einem Ritzel 2 mit stirnseitiger Geradverzahnung dargestellt. Die Achse A des Kronenrads 1 schneidet sich ohne Achsversatz mit der Achse B des Ritzels 2 unter einem Winkel von 90°. Die Zähne 3 des Ritzels 2 weisen eine in axialer Richtung des Ritzels 2 verlaufende und in Bezug auf das Kronenrad 1 von radial außen nach innen zunehmende Kopfkürzung 4 und einen - in dieser Figur nicht erkennbaren - radial von außen nach innen zunehmenden Eingriffswinkel auf. Die Verzahnung des Ritzels 2 ist zu der Verzahnung des Kronenrads 1 konjugiert ausgebildet; ein Unterschnitt der Zähne 5 des Kronenrads 1 ist nicht vorhanden. Außerdem weist das Ritzel 2 beidseits jeweils einen einteilig mit der Verzahnung ausgebildeten, ringförmigen Anschlagskörper 6 und 7 auf, von welchen der innere 7 auf seiner in dieser Darstellung nicht einsehbaren, der Verzahnung des Ritzels 2 zugewandten Innenseite zur flächigen Anlage an der nach radial innen erfolgenden sphärischen Abflachung 8 der Zähne 5 des Kronenrads 1 passend ausgebildet ist.

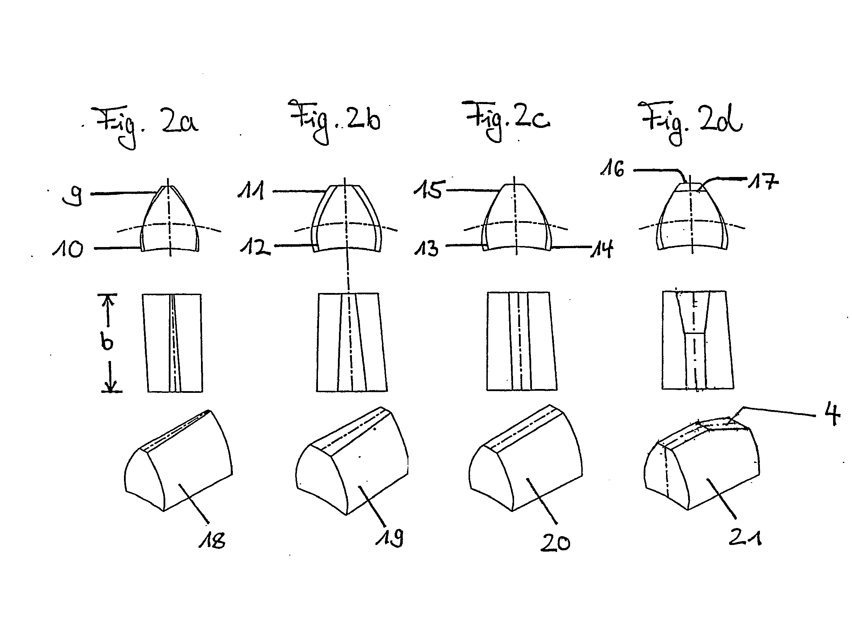

Die Fig. 2a bis 2d zeigen in jeweils drei übereinander angeordneten Teildarstellungen verschiedene Ausgestaltungen der Ritzelverzahnung einer erfindungsgemäßen Zahnradpaarung. Im jeweils oberen Teilbild ist dabei die radial äußere und radial innere Querschnittsgeometrie eines Zahns des Ritzels einer erfindungsgemäßen Zahnradpaarung dargestellt. Das mittlere Teilbild zeigt dann eine schematische Draufsicht auf den jeweiligen Zahn, der schließlich im jeweils unteren Teilbild noch in perspektivischer Darstellung zu sehen ist.

Fig. 2a zeigt dabei einen Zahn 18 eines Ritzels, der über seine axiale Breite b (bezogen auf das Ritzel) eine Variation des Eingriffswinkels aufweist. Die bezogen auf das - in dieser Abbildung nicht dargestellte - Kronenrad radial außen liegende Querschnittsgeometrie 9 des Zahns 18 weist dabei einen im Vergleich zu der radial innen liegenden Querschnittsgeometrie 10 des Zahns 18 einen dickeren Zahnkopf und einen schmaleren Zahnfuß auf. Der in Fig. 2b dargestellte Ritzelzahn 19 weist über seine axiale Breite eine Variation der Profilverschiebung auf, die in einer Variation der Zahndicke resultiert. Die Profilverschiebung nimmt dabei von - bezogen auf das Kronenrad - radial außen nach radial innen ab, wie dies an den Querschnitten 11 (außen) und 12 (innen) deutlich wird. Fig. 2c zeigt einen Ritzelzahn 20, bei dem sowohl eine radiale Zunahme des Eingriffswinkels als auch eine Variation der Profilverschiebung überlagert sind. Im vorliegenden Fall nimmt die Profilverschiebung von radial außen nach radial innen zu. Der radial äußere Querschnitt 14 weist im Vergleich zum radial innen liegenden Zahnquerschnitt 13 eine größere Dicke des Zahnfußes auf. Die Dicke des Zahnkopfs 15 bleibt über die axiale Breite des Zahns im wesentlichen konstant. Schließlich ist in Fig. 2d ein Ritzelzahn 21 dargestellt, der - neben einer Variation des Eingriffswinkels und der Profilverschiebung wie in Fig. 2c - noch eine von radial außen nach radial innen zunehmende Kopfkürzung 4 aufweist. Die Höhe des Zahnes 21 bleibt hierbei ausgehend von der Zahnhöhe gemäß dem äußeren Querschnitt 16 nach radial innen zunächst konstant und nimmt dann kontinuierlich bis zu einer geringeren Zahnhöhe gemäß der radial inneren Querschnittsform 17 des Zahns 21 ab.

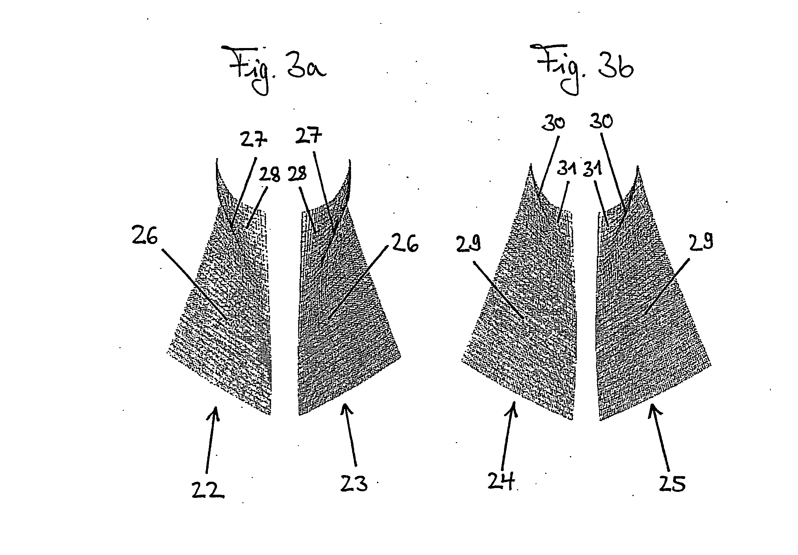

Die Fig. 3a und 3b zeigen jeweils zwei numerisch berechnete, einander zuweisende Zahnflanken 22, 23 bzw. 24, 25 der Kronenradverzahnung einer gattungsgemäßen (Fig. 3a) und einer erfindungsgemäßen (Fig. 3b) Zahnradpaarung, bei der die konjugiert hierzu ausgebildete Verzahnung des Ritzels eine erfindungsgemäße Eingriffswinkel- und Profilverschiebungsvariation aufweist. Dabei sind in der dargestellten perspektivischen Ansicht mit Blickrichtung von radial außen nach radial innen die Unterschnittgrenzen 27 bzw. 30 sehr gut zu erkennen, die die Zahnflanken 22 - 25 in tragende Zahnflankenabschnitte 26 bzw. 29 und nichttragende, unterschnittene Zahnflankenabschnitte 28 bzw. 31 trennen. Die erfindungsgemäße Ausgestaltung der Zahnradpaarung nach Fig. 3b führt zu einem radial innen liegenden Unterschnitt 31 der Zähne des Kronenrads, der deutlich geringer ist als der Unterschnitt 28 der Zähne des Kronenrads einer gattungsgemäßen Zahnradpaarung nach Fig. 3a. Die tragenden Zahnflanken 29 des Kronenrads der erfindungsgemäßen Zahnradpaarung sind im Vergleich zu den tragenden Zahnflanken 26 des Kronenrads einer gattungsgemäßen Zahnradpaarung nach radial innen verlängert.

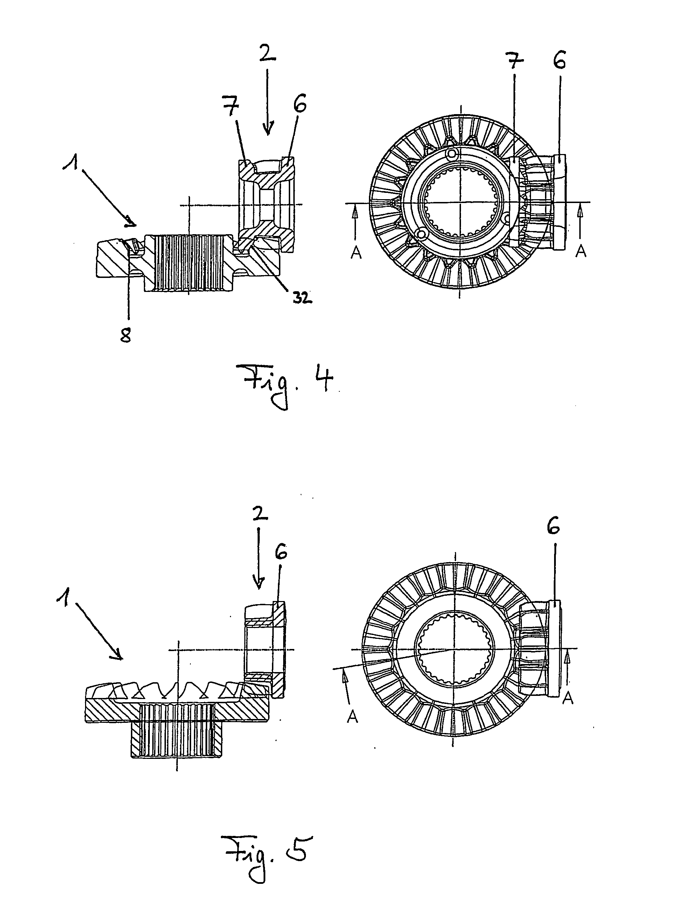

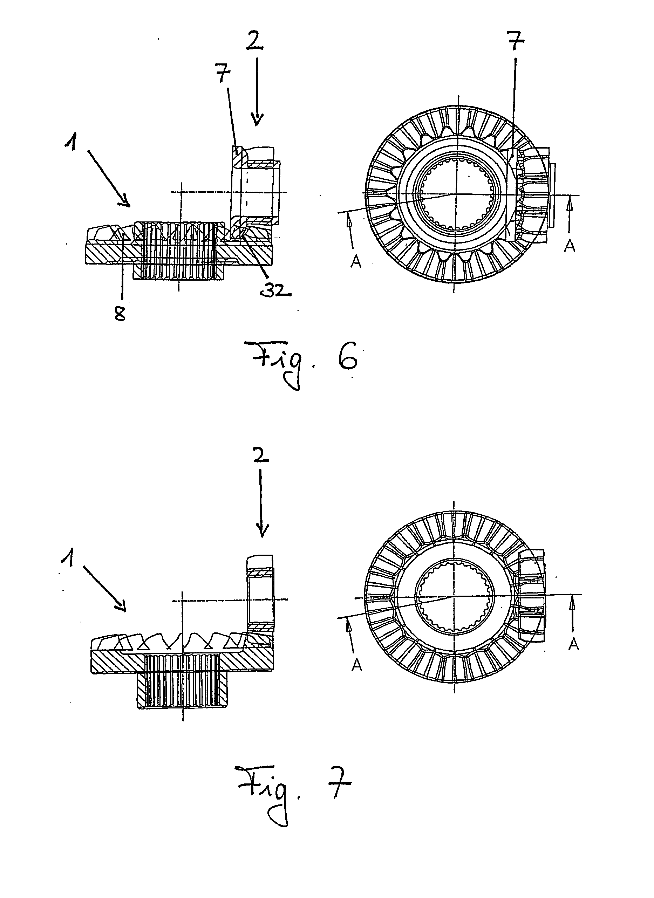

In den Figuren 4 bis 7 sind weitere Ausführungsbeispiele von erfindungsgemäßen Zahnradpaarungen aus Kronenrad 1 und Ritzel 2 jeweils in Draufsicht (rechte Abbildung) und einem Schnittbild gemäß Schnitt A-A (linke Abbildung) dargestellt. Bei den Ausführungsbeispielen gemäß Fig. 4 und Fig. 6 weist das Ritzel 2 jeweils auf einer radial innen liegenden Seite einen ringförmigen Anschlagskörper 7 auf. Die den Ritzelzähnen zuweisende Fläche 32 des inneren Anschlagskörpers 7 ist zur sphärischen Abflachung 8 der Zähne des Kronenrads passend ausgebildet und liegt dieser flächig an. Das Ritzel 2 des Ausführungsbeispiels nach Fig. 4 weist - im Gegensatz zu dem Ritzel 2 des Ausführungsbeispiels nach Fig. 6 - ferner einen zweiten, radial äußeren Anschlagskörper 6 auf, so daß das Ritzel 2 beidseits auf dem Kronenrad 1 axial geführt ist und auf diesem radial nicht mehr verschoben werden kann. Das Ritzel 2 der Zahnradpaarung nach Fig. 5 weist zur axialen Führung des Ritzels 2 auf dem Kronenrad 1 nur auf seiner radial außen liegenden Seite einen ringförmigen Anschlagskörper 6 auf, während das Ritzel 2 der Zahnradpaarung nach Fig. 7 weder mit einem inneren noch mit einem äußeren Anschlagskörper versehen ist. Eine axiale Führung des Ritzels 2 auf dem Kronenrad 1 des Ausführungsbeispiels nach Fig. 7 ist vorteilhaft mittels anderer (nicht dargestellter) axialer - in der Zahnradpaarung integrierter oder in der Umgebung der Zahnradpaarung angeordneter - Führungselemente sicherzustellen.

## Patentansprüche

1. Zahnradpaarung aus Kronenrad (1) und Ritzel (2) als geradverzahntes Stirnrad bei einem Achskreuzwinkel von 90°,
**dadurch gekennzeichnet,**
**daß** die Zähne (3) des Ritzels (2) zur Reduzierung eines Unterschnitts der Zähne (5) des Kronenrads (1) einen in radialer Richtung bezogen auf das Kronenrad (1) von außen nach innen zunehmenden Eingriffswinkel aufweisen.

2. Zahnradpaarung nach Anspruch 1,
**dadurch gekennzeichnet,**
**daß** die Zähne (3) des Ritzels (2) in radialer Richtung bezogen auf das Kronenrad (1) von außen nach innen ferner eine variable Profilverschiebung aufweisen.

3. Zahnradpaarung nach Anspruch 2,
**dadurch gekennzeichnet,**
**daß** die Profilverschiebung der Zähne (3) des Ritzels (2) von außen nach innen zunimmt.

4. Zahnradpaarung nach Anspruch 2,
**dadurch gekennzeichnet,**
**daß** die Profilverschiebung der Zähne (3) des Ritzels (2) von außen nach innen abnimmt.

5. Zahnradpaarung aus Kronenrad (1) und Ritzel (2) als geradverzahntes Stirnrad bei einem Achskreuzwinkel von 90°,
**dadurch gekennzeichnet,**
**daß** die Zähne (3) des Ritzels (2) bei konstantem Eingriffswinkel zur Reduzierung eines Unterschnitts der Zähne (5) des Kronenrads (1) eine in radialer Richtung bezogen auf das Kronenrad (1) von außen nach innen eine abnehmende Profilverschiebung aufweisen.

6. Zahnradpaarung nach Anspruch 1 oder 5, **dadurch gekennzeichnet,**
**daß** die Zähne (3) des Ritzels (2) ferner eine von radial außen nach innen zunehmende Kopfkürzung (4) aufweisen.

7. Zahnradpaarung nach Anspruch 6,
**dadurch gekennzeichnet,**
**daß** ein Unterschnitt der Zähne (5) des Kronenrads (1) vollständig vermieden wird.

8. Zahnradpaarung nach Anspruch 1,
**dadurch gekennzeichnet,**
**daß** der radial äußere Grenzwert des von radial außen nach radial innen zunehmenden Eingriffswinkels der Zähne (3) des Ritzels (2) bei oder nahe der Spitzengrenze für die Zähne (5) des Kronenrads (1) liegt und der radial innere Grenzwert des Eingriffswinkels bei oder nahe der Spitzengrenze für die Zähne (3) des Ritzels (1) liegt.

9. Zahnradpaarung nach Anspruch 2 oder 5,
**dadurch gekennzeichnet,**
**daß** der radial äußere Grenzwert der variablen Profilverschiebung der Zähne (3) des Ritzels (2) bei oder nahe der Spitzengrenze für die Zähne (5) des Kronenrads (1) liegt und der radial innere Grenzwert der Profilverschiebung bei oder nahe der Spitzengrenze für die Zähne(3) des Ritzels (2) liegt.

10. Zahnradpaarung nach Anspruch 1 oder 5,
**dadurch gekennzeichnet,**
**daß** die Zahnflanken der Zähne (3) des Ritzels (2) und der Zähne (5) des Kronenrads (1) in jedem Punkt zueinander konjugiert ausgebildet sind.

11. Zahnradpaarung nach Anspruch 1 oder 5,
**dadurch gekennzeichnet,**
**daß** zwischen Kronenrad (1) und Ritzel (2) kein Achsversatz besteht.

12. Zahnradpaarung nach Anspruch 1 oder 5,
**dadurch gekennzeichnet,**
**daß** das auf dem Kronenrad (1) umlaufende Ritzel (2) axial geführt ist.

13. Zahnradpaarung nach Anspruch 12,
**dadurch gekennzeichnet,**
**daß** das Ritzel (2) auf der in Bezug auf das Kronenrad (1) radial innen liegenden Seite und/oder radial außen liegenden Seite mit einem ring- oder deckelförmigen Anschlagskörper (7, 6) zur axialen Führung versehen ist.

14. Zahnradpaarung nach Anspruch 13,
**dadurch gekennzeichnet,**
**daß** die Zähne (5) des Kronenrads (1) nach radial innen sphärisch abgeflacht sind und ein innerer Anschlagskörper (7) des Ritzels auf seiner den Zähnen (3) des Ritzels (2) zugewandten Fläche (32) für eine flächige Anlage dazu passend ausgebildet ist.

15. Differentialausgleichsgetriebe, welches mindestens zwei Zahnradpaarungen nach einem der vorhergehenden Ansprüche aufweist, die durch zwei einander zuweisende Kronenräder (1) und ein oder mehrere dazwischen angeordnete Ritzel (2) gebildet werden.

## Claims

1. Gear wheel pairing made up of a crown gear (1) and a pinion (2) as a straight toothed spur gear with an axis intersection angle of 90°,
**characterised**
**in that** for reducing an undercutting of the teeth (5) of the crown gear (1), the teeth (3) of the pinion (2) have a meshing angle increasing from the outside inwards in the radial direction with respect to the crown gear (1).

2. Gear wheel pairing according to Claim 1,
**characterised**
**in that** the teeth (3) of the pinion (2) further have a variable profile offset from radially outside to radially inside in the radial direction with respect to the crown gear (1).

3. Gear wheel pairing according to Claim 2,
**characterised**
**in that** the profile offset of the teeth (3) of the pinion (2) increases from outside to inside.

4. Gear wheel pairing according to Claim 2,
**characterised**
**in that** the profile offset of the teeth (3) of the pinion (2) decreases from outside to inside.

5. Gear wheel pairing made up of a crown gear (1) and a pinion (2) as a straight toothed spur gear with an axis intersection angle of 90°,
**characterised**
**in that**, given a constant meshing angle, for reducing an undercutting of the teeth (5) of the crown gear (1), the teeth (3) of the pinion (2) have a profile offset decreasing from the outside inwards in the radial direction with respect to the crown gear (1).

6. Gear wheel pairing according to Claim 1 or 5,
**characterised**
**in that** the teeth (3) of the pinion (2) further also have a tip truncation (4) increasing from radially outside to radially inside.

7. Gear wheel pairing according to Claim 6,
**characterised**
**in that** an undercutting of the teeth (5) of the crown gear (1) is avoided completely.

8. Gear wheel pairing according to Claim 1,
**characterised**
**in that** the radially outer limit value of the meshing angle of the teeth (3) of the pinion (2), which increases from radially outside to radially inside, is or is close to the tip limit for the teeth (5) of the crown gear (1) and the radially inner limit value of the meshing angle is or is close to the tip limit for the teeth (3) of the pinion (1).

9. Gear wheel pairing according to Claim 2 or 5,
**characterised**
**in that** the radially outer limit value of the variable profile offset of the teeth (3) of the pinion (2) is or is close to the tip limit for the teeth (5) of the crown gear (1) and the radially inner limit value of the profile offset is or is close to the tip limit for the teeth (3) of the pinion (2).

10. Gear wheel pairing according to Claim 1 or 5,
**characterised**
**in that** the tooth profiles of the teeth (3) of the pinion (2) and of the teeth (5) of the crown gear (1) are constructed at each point in a manner conjugated to one another.

11. Gear wheel pairing according to Claim 1 or 5,
**characterised**
**in that** there is no axial offset between crown gear (1) and pinion (2).

12. Gear wheel pairing according to Claim 1 or 5,
**characterised**
**in that** the pinion (2) rotating on the crown gear (1) is axially guided.

13. Gear wheel pairing according to Claim 12,
**characterised**
**in that** the pinion (2) is provided with a ring- or cover-like stop body (7, 6) for axial guiding on the radially inner side and/or radially outer side with respect to the crown gear (1).

14. Gear wheel pairing according to Claim 13,
**characterised**
**in that** the teeth (5) of the crown gear (1) are radially inwardly spherically flattened and an inner stop body (7) of the pinion is constructed on its face (32) facing the teeth (3) of the pinion (2) so as to fit that for flat bearing.

15. Differential gear unit which has at least two gear wheel pairings according to any one of the preceding claims, which are formed by means of two mutually facing crown gears (1) and one or a plurality of pinions (2) arranged therebetween.

## Revendications

1. Engrenage constitué de roues crénelées (1) et de pignon (2) sous forme de roue droite à denture droite avec un angle de croisement d'axes de 90°,
**caractérisé en ce que**
les dents (3) du pignon (2) présentent pour la réduction d'un étranglement des dents (5) de la roue crénelée (1) un angle d'attaque augmentant de l'extérieur vers l'intérieur dans le sens radial par rapport à la roue crénelée (1).

2. Engrenage selon la revendication 1,
**caractérisé en ce que**
les dents (3) du pignon (2) présentent également un déport de profil variable dans le sens radial de l'extérieur vers l'intérieur par rapport à la roue crénelée (1).

3. Engrenage selon la revendication 2,
**caractérisé en ce que**
le déport de profil des dents (3) du pignon (2) augmente de l'extérieur vers l'intérieur.

4. Engrenage selon la revendication 2,
**caractérisé en ce que**
le déport de profil des dents (3) du pignon (2) augmente de l'extérieur vers l'intérieur.

5. Engrenage comprenant une roue crénelée (1) et un pignon (2) sous forme de roue droite à denture droite avec un angle de croisement d'axes de 90°,
**caractérisé en ce que**
les dents (3) du pignon (2) présentent, avec un angle d'attaque constant, pour la réduction d'un étranglement des dents (5) de la roue crénelée (1) un déport de profil décroissant de l'extérieur vers l'intérieur dans le sens radial par rapport à la roue crénelée (1).

6. Engrenage selon la revendication 1 ou 5,
**caractérisé en ce que**
les dents (3) du pignon (2) présentent également une réduction de la tête (4) augmentant radialement de l'extérieur vers l'intérieur.

7. Engrenage selon la revendication 6,
**caractérisé en ce que**
un étranglement des dents (5) de la roue crénelée (1) est évité complètement.

8. Engrenage selon la revendication 1,
**caractérisé en ce que**
la valeur limite radialement extérieure de l'angle d'attaque, augmentant de l'extérieur radialement vers l'intérieur radialement, des dents (3) du pignon (2) se situe sur ou à proximité de la limite de pointe pour les dents (5) de la roue crénelée (1) et la valeur limite radialement intérieure de l'angle d'attaque sur ou à proximité de la limite de pointe pour les dents (3) du pignon (1).

9. Engrenage selon la revendication 2 ou 5,
**caractérisé en ce que**
la valeur limite radialement extérieure du déport de profil variable des dents (3) du pignon (2) se situe sur ou à proximité de la limite de pointe pour les dents (5) de la roue crénelée (1) et la valeur limite radialement intérieure du déport de profil sur ou à proximité de la limite de pointe pour les dents (3) du pignon (2).

10. Engrenage selon la revendication 1 ou 5,
**caractérisé en ce que**
les flancs de dent des dents (3) du pignon (2) et des dents (5) de la roue crénelée (1) sont conçus en tout point de façon conjuguée les uns par rapport aux autres.

11. Engrenage selon la revendication 1 ou 5,
**caractérisé en ce que**
il n'y a aucun déport d'axe entre la roue crénelée (1) et le pignon (2).

12. Engrenage selon la revendication 1 ou 5,
**caractérisé en ce que**
le pignon (2) tournant sur la roue crénelée (1) est guidé axialement.

13. Engrenage selon la revendication 12,
**caractérisé en ce que**
le pignon (2) est doté, pour le guidage axial, d'un corps de butée (7, 6) en forme de bague ou de couvercle sur le côté situé radialement à l'intérieur et/ou radialement à l'extérieur par rapport à la roue crénelée (1).

14. Engrenage selon la revendication 13,
**caractérisé en ce que**
les dents (3) de la roue crénelée (1) sont aplaties de façon sphérique radialement vers l'intérieur et un corps de butée (7) intérieur du pignon est conçu, sur sa surface (32) tournée vers les dents (3) du pignon (2), de façon adaptée pour un appui à plat.

15. Engrenage différentiel, qui présente au moins deux engrenages selon l'une quelconque des revendications précédentes, qui sont formés par deux roues crénelées (1) tournées l'une vers l'autre et un ou plusieurs pignons (2) disposés entre ces roues.
